# EUROPEAN PATENT APPLICATION

(11) **EP 2 835 733 A1**
(43) Date of publication of application: **11.02.2015**
(21) Application number: 14180187.8
(22) Date of filing: 07.08.2014
(51) Int. Cl.: G06F 3/0488, H04N 21/422, H04N 21/472, H04N 21/4782, H04N 21/482, H04N 5/445, H04N 5/775, H04N 21/432, G06F 17/30, H04N 5/44

(54) **Display apparatus, the method thereof and item providing method**

(30) Priority: 09.08.2013 KR 20130094656; 19.08.2013 KR 20130097566
(71) Applicant: Samsung Electronics Co., Ltd, Gyeonggi-do 443-742 (KR)
(72) Inventor: Myoung-jun, LEE, Gyeonggi-do (KR); NA, Moon-sung, Gyeonggi-do (KR); YUN, Hyun-kyu, Seoul (KR); KEUM, Kun-ho, Gyeonggi-do (KR); KIM, Kwan-young, Gyeonggi-do (KR); KIM, Sang-jin, Gyeonggi-do (KR); KIM, Min-sup, Gyeonggi-do (KR)
(74) Representative: Davies, Robert Ean

(57) **Abstract**

Provided is a display apparatus including: a display; an input unit configured to receive a trace of writing performed in a remote control apparatus; a detector configured to extract at least one character corresponding to the trace of writing; and a controller configured to search for at least one item corresponding to the character from among a plurality of items stored in a storage of the display apparatus or provided from at least one external server, and display a result of the search on the display.

## Description

### CROSS-REFERENCE TO RELATED APPLICATIONS

This application claims priority from Korean Patent Application No. 10-2013-0094656 filed in the Korean Intellectual Property Office on August 9, 2013, priority from Korean Patent Application No. 10-2013-0097566 filed in the Korean Intellectual Property Office on August 19, 2013, the disclosure of which is incorporated herein by reference.

### BACKGROUND

### 1. Field

Methods and apparatuses consistent with the exemplary embodiments relate to displaying an item corresponding to a trace of writing of a user.

### 2. Description of the Prior Art

With the recent development of display technologies, televisions (TVs) adopting various functions are being released. It is not only possible to view contents through TVs but also to experience various contents and applications through TVs. The smart TV is an example of such a TV that provides various functions.

As much as the various functions that smart TVs provide, control devices necessary for these functions are becoming complicated. Therefore, in order to lower the barrier against using these various functions due to such complicated control devices, the control devices and user interfaces (UIs) used in smart TVs need to be simplified. Due to such need, there is a tendency to design simple buttons used in smart TVs to pursue convenience in using smart TVs.

However, such remote controls having simplified designs have limitations for users to easily search for contents they want. That is, in related art smart TVs, users have to find the contents they want in the TVs for themselves, and thus it takes a lot of time and difficulty in searching.

### SUMMARY

One or more exemplary embodiments address the aforementioned problems by providing a display apparatus configured to search for an item according to a trace of a user's writing, a method thereof and an item providing method thereof.

According to an aspect of an exemplary embodiment of the present disclosure, there is provided a display apparatus which may include: a display; an input unit configured to receive a trace of writing performed in a remote control apparatus; a detector configured to extract at least one character corresponding to the trace of writing; and a controller configured to search forat least one item corresponding to the character from among a plurality of items stored in a storage of the display apparatus or provided from at least one external server, and display a result of the search on the display.

The controller, in response to selection of an item from among one or more items displayed as the result of the search, may receive the selected item or relevant information from the storage or the external server, and execute or process the received item or relevant information.

The controller, in response to selection of a pay item from among one or more items displayed as the result of the search, may display a payment screen regarding the selected pay item, and in response to a payment being made through a payment screen on the display, receive the pay item or relevant information from the external server and execute or process the received pay item or relevant information.

The controller, in response to a trace of subsequent writing performed in the remote control apparatus, may extract at least one subsequent character corresponding to the trace of the subsequent writing, re-search for at least one item corresponding to a combination of the character and the subsequent character, and display a result of the re-search on the display.

The controller may position a writing display area displaying the trace of writing at one area of a screen of the display, match each of the plurality of categories to top, bottom, left, and right direction of the writing display area, and align and display the searched at least one item according to the categories.

The controller may position the writing display area at a center of the screen.

According to an aspect of another exemplary embodiment of the present disclosure, there is provided a display method which may include: receiving a trace of writing from a remote control apparatus; extracting at least one character corresponding to the trace of writing; searching for at least one item corresponding to the character from among a plurality of items stored in a storage of the display apparatus or provided from at least one external server; and displaying a result of the searching.

The display method may further include: selecting an item from among one or more items displayed as the result of the search; receiving the selected item or relevant information from the storage or the external server; and executing or processing the received item or relevant information.

The display method may further include: selecting a pay item from among one or more items displayed as the result of the search; displaying a payment screen regarding the selected pay item; in response to a payment being made through a payment screen on a display, receiving the pay item or relevant information from the external server; and executing or processing the received pay item or relevant information.

The display method may further include: in response to a trace of subsequent writing performed in the remote control apparatus, extracting at least one subsequent character corresponding to the trace of the subsequent writing; re-searching for at least one item corresponding to a combination of the character and the subsequent character; and displaying a result of the re-search.

The display method may further include comprising classifying the re-searched at least one item into a plurality of categories.

The display method may further include displaying the combination of the character and the subsequent character on the display.

According to an aspect of still another exemplary embodiment of the present disclosure, there is provided a method of providing an item on a display apparatus which may include: receiving an item from an item manufacturer; transmitting the item to the display apparatus, and displaying the item until a selection of the item is made in the display apparatus; and in response to selection of the item by a user, receiving a benefit regarding the item from the item manufacturer, wherein the selection of the item is performed based on a trace of writing received from a remote control apparatus, and wherein the displaying comprises classifying the item according to a plurality of categories and displaying the item.

The display method may further include: in response to the selection of the item by the user, displaying a payment screen regarding the selected item; and in response to a payment being made through the payment screen, transmitting the selected item to the display apparatus.

According to the various aforementioned exemplary embodiments of the present disclosure, a user may search contents included in the display apparatus or contents not included in the display apparatus intuitively and experience the same.

### BRIEF DESCRIPTION OF THE DRAWINGS

The above and/or other aspects of the present disclosure will be more apparent by describing certain exemplary embodiments with reference to the accompanying drawings, in which:
FIG. 1 is a block diagram of a display apparatus according to an exemplary embodiment of the present disclosure.
FIG. 2 is a block diagram of a configuration of a communication system according to an exemplary embodiment of the present disclosure.
FIG. 3 is a block diagram for explaining in detail a configuration of a display apparatus according to an exemplary embodiment of the present disclosure.
FIG. 4 is a block diagram for comprehensively explaining a configuration of a display apparatus according to an exemplary embodiment of the present disclosure.
FIG. 5 is an example of a software structure used in a display apparatus according to an exemplary embodiment of the present disclosure.
FIG. 6 is an example of a flowchart of a display method according to an exemplary embodiment of the present disclosure.
FIG. 7 is another example of a flowchart of a display method according to an exemplary embodiment of the present disclosure.
FIG. 8 is an example of a user's writing according to an exemplary embodiment of the present disclosure.
FIG. 9 is an example of a detailed screen of a display apparatus according to an exemplary embodiment of the present disclosure.
FIG. 10 is another example of a detailed screen of a display apparatus according to an exemplary embodiment of the present disclosure.
FIG. 11 is another example of a user's writing according to an exemplary embodiment of the present disclosure.
FIG. 12 is another example of a detailed screen of a display apparatus according to an exemplary embodiment of the present disclosure.
FIG. 13 is an example of a user's input according to an exemplary embodiment of the present disclosure.
FIG. 14 is another example of a detailed screen of a display apparatus according to an exemplary embodiment of the present disclosure.
FIG. 15 is a flowchart of an item providing method according to an exemplary embodiment of the present disclosure.

### DETAILED DESCRIPTION OF THE EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

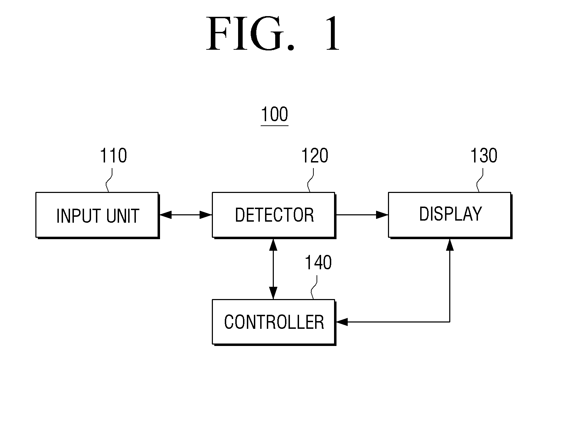

FIG. 1 is a block diagram of a display apparatus 100 according to an exemplary embodiment of the present disclosure.

Referring to FIG. 1, a display apparatus according to an exemplary embodiment of the present disclosure 100 comprises an input unit 110, detector 120, display 130, and controller 140.

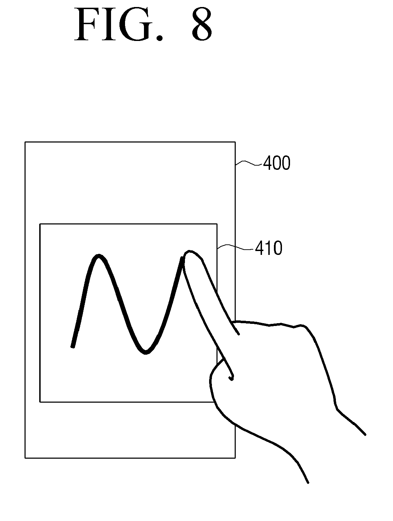

The input unit 110 receives a control signal from a remote control apparatus of the display apparatus. That is, in response to a user transmitting a control signal regarding the display apparatus 100 using the remote control apparatus, the input unit 110 may receive the control signal. Here, the remote control apparatus may be a remote control apparatus 400 that is shown in FIG. 8.

The remote control apparatus may comprise a touch pad which may correspond to a touch pad 410 shown in FIG. 8. In this case, the user may input a control signal through the touch pad of the remote control apparatus. More specifically, the user may perform writing using fingers, pen, or other input means on the touch pad. The remote control apparatus transmits the user's writing being input through the touch pad to the display apparatus 100. Not only that, the touch pad may display a touch input area comprising a letter key, number key, and function key and the like. Therefore, the remote control apparatus may comprise a button for selecting whether to input the user's writing or to perform a key input at the user selection.

Therefore, in the case where the function of inputting a user's writing is selected, in response to a user's writing being performed on the touch pad provided on the remote control apparatus, the touch pad may display the user's writing. In this case, the remote control apparatus may transmit a signal corresponding to the user's writing to the input unit 110 of the display apparatus 100. The input unit 110 may receive the signal corresponding to the user's writing and transmit the received signal to the detector 120.

The detector 120 may receive the signal corresponding to the user's writing from the input unit 110, and extract a character corresponding to a trace of the user's writing. That is, the detector 120 may detect the trace of the user's writing input, and extract the character corresponding to the trace of the writing. In the present embodiment, the character extracted according to the trace of the writing is not limited to any alphabet but may indicate any number or special character not being limited thereto.

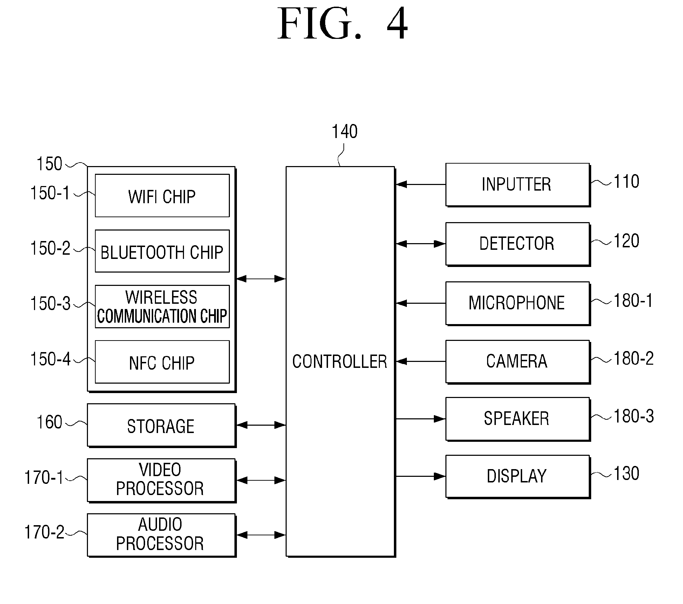

In this case, the display apparatus 100 may further comprise a storage (not illustrated in FIG. 1) for storing a plurality of characters. The storage may be a storage 160 illustrated in FIG. 4. The storage may be connected to the detector 120. Therefore, the detector 120 may analyze the trace of the user's writing input from the input unit 110, and extract a character corresponding thereto from the storage. The detector 120 that extracted the character corresponding to the trace of the user's writing may transmit the extracted character to the controller 140 and display 130. In order to analyze the trace of the writing, the detector 120 may analyze coordinate data of the input trace of the writing according to an exemplary embodiment.

First of all, the detector 120 may analyze the coordinate data of the trace of the user's writing, detect the characteristics of the trace of the writing, and extract a character corresponding to those characteristics. The detector 120 may analyze the trace of the writing in various methods.

For example, the detector 120 may divide the trace from a starting point of the writing to an end point of the writing in units of a certain distance, and detect a direction vector of a line connecting the starting point and the end point of each unit distance. The detector 120 may calculate angles between the direction vectors (e.g., direction vectors of two unit distances), and determine the characteristics of the trace of the writing based on a result of the calculation. For example, if angles between the direction vectors of all unit distances are zero or within a threshold value, the detector 120 determines the entire trace of the writing as being a straight line.

On the other hand, if there is an angle between direction vectors of two unit distances that is different by a certain amount greater than the threshold, the detector 120 may determine that the trace of the writing is bent at that part between the two unit distances. If the number of bent parts in the trace of the writing is greater than or equal to a predetermined number, the detector 120 may determine that the trace of the writing as being a curve.

In addition, if there exists an overlapping part in the trace of the writing, the detector 120 recognizes that a looped curve has occurred in that part. The detector 120 may detect the characteristics of the trace of the writing of the user based on whether there is a looped curve, a bent angle of a line, and the number of bent parts and the like. The detector 120 may compare the detected characteristics with pre-stored character information, and, as a result of the comparison, determine what character the trace of the user's writing indicates to extract the character. The character extracted as above may be displayed by the display 130 connected to the detector 120.

In addition, in response to another trace of writing being input within a predetermined time, the detector 120 may analyze coordinate data as aforementioned, thereby determining whether the other trace is a straight line or a curve. The display 130 may extract a character corresponding to the other trace of the writing input within the predetermined time, and add this character to the previously extracted character to display a result of the addition.

As aforementioned, the detector 120 may combine one or more traces of writings input within a predetermined time after an immediately previous trace of writing and extract an entire text, that is, a combination of extracted characters. The detector 120 may transmit the text extracted in such a method to the display 130 and controller 140. The display 130 may display the text transmitted from the detector 120. The controller 140 may search an item according to the text transmitted from the detector 120.

The controller 140 may receive the text from the detector 120, and search one or more items corresponding to the received text. The items may include one or more pieces various information such as broadcast channel, contents genre, contents title, application, function, web site, or the like.

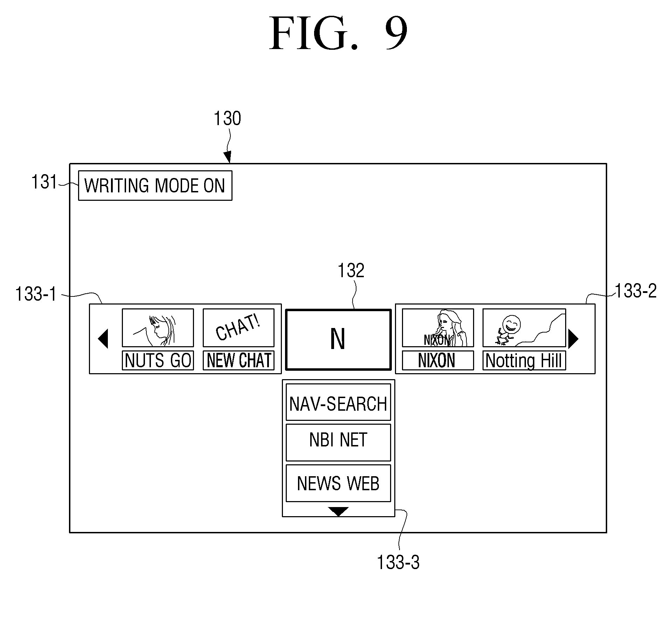

The items may be stored in the storage, or may be received from an external transmission apparatus or an external server. In such a case, the external transmission apparatus or external server may be more than one. In addition, a plurality of external transmission apparatuses or external servers may be individually managed by different entities. Therefore, the controller 140 may search an item corresponding to one or more characters or text extracted from the storage and receive the searched item, or search the item corresponding to the characters or text from the external transmission apparatus and/or external server and receive the searched item. If there is no searched item, the controller 140 may display a message showing that there is no searched item. In addition, when there is a plurality of searched items, the controller 140 may classify the searched plurality of items into a plurality of categories and display the classified items. This will be explained in further detail with reference to FIGs. 9 to 10.

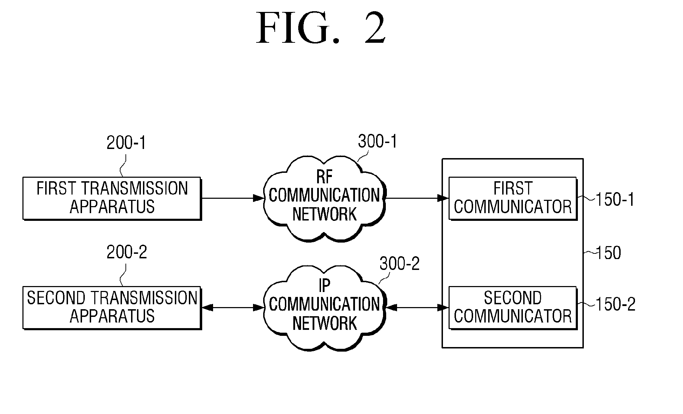

In addition, in the case where the item searched by the controller 140 is an item recommended by the external server, and the user selects the item recommended by the external server, the external server may transmit the item to the controller 140 through a communicator 150 (as shown in FIGs. 2 and 4) and display the same. Meanwhile, if the item searched by the controller 140 is an item recommended by the external server and also a pay item, the controller 140 may show that it is a pay item. In addition, in response to a user selecting the pay item, the controller 140 may display a payment screen regarding the pay item, and in response to a payment for the pay item, the controller 140 may receive the pay item from the external server.

As described above, in response to a subsequent writing being made in the remote control apparatus, the controller 140 may extract a subsequent character from a trace of the subsequent writing. In this case, the controller 140 may control the display apparatus 100 such that an item corresponding to a combination of a previously extracted character and a subsequently extracted character is re-searched. The process of re-searching an item corresponding to a combination of these two characters is the same or similar to the aforementioned item search process. In this case, the controller 140 may also classify re-searched items into a plurality of categories to display these items by category.

According to an exemplary embodiment, the controller 140 may control the display apparatus 100 such that a writing display area denoting the received trace of writing is positioned at one area on a screen of the display 130. In addition, the controller 140 may control such that each of the plurality of categories is arranged in a top, bottom, left and/or right direction of the writing display area, and the searched items are classified and displayed by category. In this case, the plurality of categories may comprise an application category and/or a contents category, and the contents category may include at least one of a movie category, a drama category, a documentary category, a news/information category, and an entertainment category. In addition, the writing display area may be positioned on a center of the screen. In response to one item among the at least one item being displayed as above, the controller 140 may control the display apparatus 100 to execute a program corresponding to the selected item.

The display apparatus 100 may search for an item from various sources and display the searched item. The various sources may include the storage included in the display apparatus 100 and external apparatuses such as a contents reproducing apparatus, a broadcasting station, a web server, a cloud server, and a user terminal apparatus, etc.

FIG. 2 is a block diagram of a configuration of a communication system that may search for an item from various external apparatuses according to an exemplary embodiment of the present disclosure. Referring to FIG. 2, the communication system comprises a plurality of transmission apparatuses and communicator 150. Here, the plurality of transmission apparatuses may be servers included in the various external apparatuses, and the communicator 150 may be included in the display apparatus 100 of FIG. 1.

The plurality of transmission apparatuses transmit signals through different communication networks. In FIG. 2, it is illustrated that the first transmission apparatus 200-1 transmits signals through a radio frequency (RF) communication network 300-1, the second transmission apparatus 200-2 transmits signals through an IP communication network 300-2, but there is no limitation to the type of communication networks. For convenience of explanation, herein, a signal transmitted by the first transmission apparatus 200-1 is referred to as a first signal, and a signal transmitted by the second transmission apparatus 200-2 is referred to as a second signal.

The first signal and second signal may each comprise data used to configure one or more items to be displayed on the display 130. The first signal may include data received through the RF communication network 300-1, and the second signal may include data received through the IP communication network 300-2. The first signal and the second signal may be received simultaneously by the controller 140 or may be received selectively or at different times. In addition, the first signal may include data configuring one item, an item different from an item configured by the second signal. The first signal may include data configuring a part of one item, and the second signal may be data configured to configure the rest of the same item. Otherwise, the data may be video data and/or audio data, or be differentiated according to various standards.

The method and configuration of transmitting a signal through a communication network 300-1 may be embodied differently according to broadcasting standards. That is, digital broadcasting standards include Advanced Television System Committee (ATSC) standards, Digital Video Broadcasting (DVB) standards, and Integrated Services Digital Broadcasting-Terrestrial (ISDB-T) standards.

The detailed configuration and operations of the first transmission apparatus 200-1 that transmits a first signal through the RF communication network 300-1 may differ according to which broadcasting standard is applied. The configuration and operations of the first communicator 150-1 may also differ according to the applied broadcasting standard. For example, when an ATSC standard is adopted, the first transmission apparatus 200-1 may comprise a randomizer, a Reed-Solomon (RS) encoder, a data interleaver, a trellis encoder, a sync and pilot inserter, an 8 vestigial sideband (VSB) modulator, an RF up converter, and an antenna. On the other hand, the first communicator 150-1 may comprise an antenna, an RF down converter, a demodulator, an equalizer, a demultiplexer, an RS decoder, and a deinterleaver. The detailed configuration for signal transmission and receiving per each broadcasting standard is disclosed in detail in the standard document of each broadcasting standard, and thus detailed illustration and explanation is omitted.

The second transmission apparatus 200-2 transmits a second signal including additional data to the second communicator 150-2 through the IP communication network 300-2. The IP communication network 300-2 may be embodied as various types of network such as a web, a cloud network, a local network and the like. The second transmission apparatus 200-2 may transmit the second signal in a streaming method. More specifically, various streaming methods such as the Real Time Protocol (RTP) or Hypertext Transfer Protocol (HTTP) may be used. According to another exemplary embodiment, the second transmission apparatus 200-2 may provide additional data in a download method. In the download method, a file format may be one of various formats such as Audio Video Interleave (AVI), MPEG, MOV, Windows Media (WMV).

Meanwhile, the controller 140 of the display apparatus 100 may have various configurations.

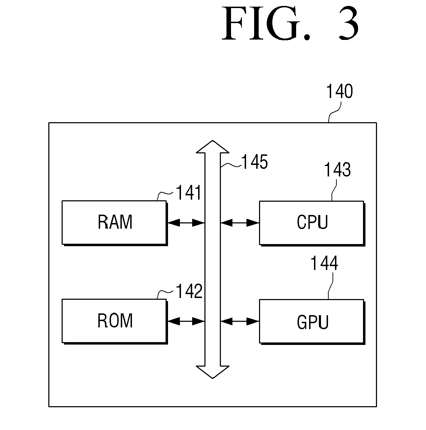

FIG. 3 is a block diagram for explaining a detailed configuration of the controller 140 according to an exemplary embodiment of the present disclosure.

Referring to FIG. 3, the controller 140 controls the overall operations of a display apparatus 100. The controller 140 comprises a random access memory (RAM) 141, a read-only memory (ROM) 142, a central processing unit (CPU) 143, a graphics processing unit (GPU) 144, and a bus 145. The RAM 141, ROM 142, CPU 143, and GPU 144 may be connected to one another by bus 145.

The CPU 143 accesses the storage, and performs booting using an operating system (O/S) stored in the storage. In addition, the CPU 143 performs various operations using various programs, contents, and data stored in the storage. The CPU 143 analyzes a trace of writing, and extracts a character or text corresponding to the analyzed trace of the writing from the storage.

The ROM 142 stores command sets for system booting. In response to a turn-on command being input and power is supplied, the CPU 143 copies the O/S stored in the storage to the RAM 141 according to the command stored in the ROM 142, and executes the O/S to boot the system. When booting is completed, the CPU 143 copies various programs stored in the storage to the RAM 141, and executes the program copied to the RAM 141 to perform various operations.

In response to the booting of the display apparatus 100 being completed, the GPU 144 displays an item screen, contents screen or search result screen and the like. More specifically, the GPU 144 uses a calculator (not illustrated) and renderer (not illustrated) to create a screen comprising various objects such as an icon, image, and text and the like. The calculator calculates feature values such as a coordinate value, format, size, and color where each object will be displayed according to a layout of a screen. The renderer creates a screen of one of various layouts comprising an object based on the feature value calculated in the calculator. The screen created in the renderer is provided to the display 130, and is displayed within a display area. Meanwhile, the GPU 144 displays the character or text and one or more items corresponding to character or text based on a signal received from the remote control apparatus.

The display 130 displays various screens as aforementioned. The display 130 may be embodied as a display of one of various formats such as Liquid Crystal Display (LCD), Organic Light Emitting Diodes (OLED) display, Plasma Display Panel (PDP). In the display 130, a driving circuit and backlight unit that may be embodied in one of various formats such as amorphous silicon (a-si) thin-film-transistor (TFT), low temperature poly silicon (LTPS) TFT, organic TFT (OTFT) may be included.

FIG. 4 is a block diagram for comprehensively explaining a configuration of the display apparatus 100 according to an exemplary embodiment of the present disclosure.

Referring to FIG. 4, the display 100 comprises a detector 120, a display 130, a controller 140, a communicator 150, a storage 160, a video processor 170-1, an audio processor 170-2, an input unit 110, a microphone 180-1, a camera 180-2, and a speaker 180-3.

The storage 160 is a configurative element for storing various programs and data necessary for operation of the display apparatus 100.

The display 130 may be embodied as a general LCD display, or a touch screen format. When the display 130 is embodied as a touch screen, the user may touch the screen and control the operations of the display apparatus 100. In addition, when the display 130 is not embodied as a touch screen, the input unit 110 may receive a signal transmitted from the remote control apparatus and transmit the signal to the controller 140.

The controller 140 may control the overall operations of the display apparatus 100 using various programs and data stored in the storage 160. The display 130 and controller 140 were already explained in the aforementioned various exemplary embodiments, and thus repeated explanation is omitted.

The communicator 150 is a configuration for performing communication with various types of external apparatuses or devices according to various types of communication methods. The communicator 150 may include a Wifi chip 150-1, a bluetooth chip 150-2, a wireless communication chip 150-3 and a near field communication (NFC) chip 150-4.

The Wifi chip 150-1 and the bluetooth chip 150-2 perform communication in a Wifi method and a bluetooth method, respectively. In the case of using the Wifi chip 150-1 or the bluetooth chip 150-2, various connection information such as a service set identifier (SSID) and session keys, etc. may be transmitted first, and then connection information may be used for communication connection, and various information may be transmitted. The wireless chip 150-3 refers to a chip that performs communication according to various communication standards such as IEEE, Zigbee, 3rd Generation (3G), 3rd Generation Partnership Project (3GPP), and Long Term Evolution (LTE). The NFC chip 150-4 refers to a chip that operates in NFC using 13.56 MHz band among various RFID frequency bands such as 135 kHz, 13.56 MHz, 433 MHz, 860-960 MHz and 2.45 GHz.

In addition, the communicator 150 may perform communication with various external server apparatuses such as a search server and the like. In response to detecting a character or text corresponding to a trace of writing of the user based on a signal received through the input unit 110, the controller 140 accesses various external server apparatuses through the communicator 150 and receives one or more items corresponding to the detected character or text. Otherwise, the communicator 150 may perform communication directly with various types of external apparatuses instead of the server apparatus and perform searching.

The video processor 170-1 processes video data received through the communicator 150 to configure one or more items and one or more items stored in the storage 160. That is, the video processor 170-1 may perform various image processing such as decoding, scaling, noise filtering, frame rate conversion and resolution conversion for the video data.

The audio processor 170-2 processes audio data received through the communicator 150 to configure one or more items or one or more items stored in the storage 160. The audio processor 170-2 may perform various processing such as decoding, amplification and noise filtering for the audio data.

If an item corresponding to a multimedia content is selected from among a plurality of items displayed on the display 150, the controller 140 receives the multimedia content through the communicator 150.

If the multimedia content is received, the controller 140 demultiplexes the multimedia content and extracts video data and audio data, and decodes the extracted video data and audio data and controls the video processor 170-1 and audio processor 170-2 to reproduce the selected item.

The display 130 may display an image frame generated in the video processor 170-1.

The speaker 180-3 outputs audio data generated in the audio processor 170-2.

The input unit 110 may receive a manipulation signal transmitted by an external remote control apparatus and transmit the received manipulation signal to the controller 140. In this case, the input unit 110 may be formed at any area of a front part, side part, rear part of an exterior of the main body of the display apparatus 110.

The microphone 180-1 receives user's voice or other sound and for converting it to audio data. The controller 140 may use the user's voice being input through the microphone 180-1 in searching for or extracting an item, or may convert the user's voice being input through the microphone 180-1 into audio data and store the converted audio data in the storage 160.

The camera 180-2 is a configuration for photographing a still image or video according to a user's control. The camera 180-2 may be embodied in a plurality of cameras such as a front camera and rear camera.

In the case where the camera 180-2 and microphone 180-1 are provided, the controller 140 may perform control operations according to a user's voice or motion recognized by the camera 180-2. That is, the display apparatus 100 may operate in a motion control mode or voice control mode. In the case of operating in a motion control mode, the controller 140 activates the camera 180-2 to photograph the user, and tracks changes of the user's motion and performs control operations corresponding thereto. In the case of operating in the voice control mode, the controller 140 may analyze the user's voice input through the microphone 180-1, and operate in a voice recognition mode for performing control operations according to the analyzed user's voice. Therefore, the camera 180-2 and microphone 180-1 may recognize the user's motion or s voice and be used in the controller 140 extracting an item corresponding to the user's motion or voice.

In the display apparatus where the motion control mode and voice control mode are provided, voice recognition technologies or motion recognition technologies may be used in the various aforementioned exemplary embodiments. For example, in the case where the user performs a motion as if selecting an object such as an item displayed on the screen, or where the user pronounces a voice command corresponding to that object, the display apparatus may determine that the object is selected, and perform control operations matching that object.

Otherwise, although not illustrated in FIG. 4, according to exemplary embodiments, the display apparatus 100 may further comprise various external input ports for connecting to various external apparatuses such as a universal serial bus (USB) device, a headset, a mouse, and a local area network (LAN) device, and a digital multimedia broadcasting (DMB) chip for receiving signals and processing the received signals.

As aforementioned, the display apparatus 100 may be embodied in one of various form.

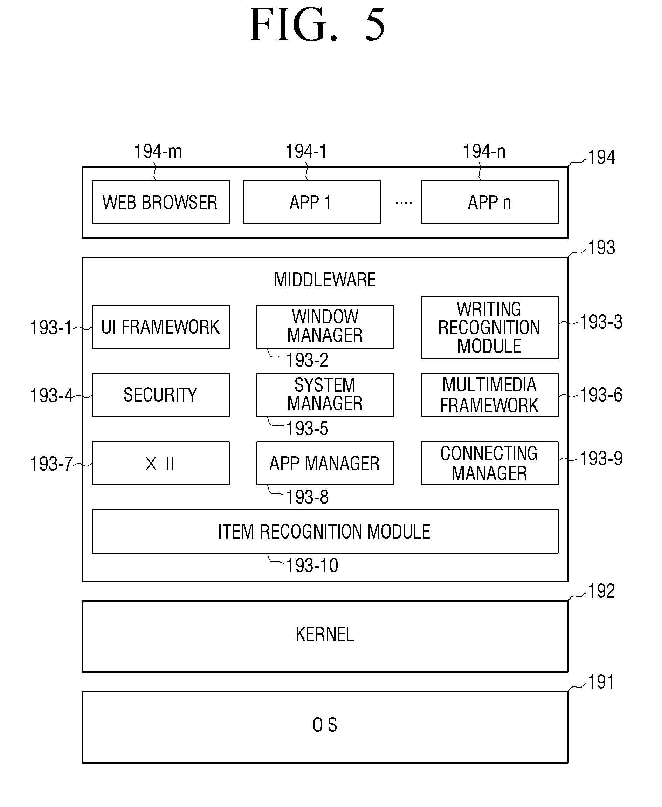

FIG. 5 is a block diagram of a software structure used in a display apparatus according to an exemplary embodiment of the present disclosure.

The software of FIG. 5 may be stored in the storage 160 but is not limited thereto, and may thus be stored in one of various types of storage means used in the display apparatus 100. According to FIG. 5, in the display apparatus 100, software including an OS 191, kernel 192, middleware 193, and application may be stored.

The operating system 191 performs a function of controlling and managing overall operations of hardware. That is, OS 191 is a layer in charge of basic functions such as hardware management, memory and security.

The kernel 192 plays a role of a path for transmitting various signals sensed by sensing means inside the display apparatus 100 to the middleware 193.

The middleware 193 comprises various software modules controlling operations of the display apparatus 100. According to FIG. 5, the middleware 193 comprises a user interface (UI) framework 193-1, window manager 193-2, writing recognition module 193-3, security module 193-4, system manager 193-5, multimedia framework 193-6, X11 module 193-7, application software (APP) manager 193-8, and connecting manager 193-9.

The UI framework 193-1 is a module for providing various UIs. The UI framework 193-1 may include an image compositor module configuring various objects such as characters, texts and items, a coordinate compositor module for calculating coordinates where objects are to be displayed, a rendering module for rendering the configured object to the calculated coordinates, and two-dimensional and three-dimensional (2D/3D) UI toolkit providing a tool for configuring a UI of 2D or 3D format.

The window manager 193-2 may sense a touch event using the user's body or a pen, a voice recognition event using the user's voice, a movement operation recognition event using the user's movements, and other input events. When such an event is sensed, the window manager 193-2 transmits an event signal to the UI framework 193-2, so that operations corresponding to the event is performed.

The writing recognition module 193-3 is a module for parsing a trace of a user's writing on the touch pad of the remote control apparatus and recognizing the trace. The detector 120 may execute the writing recognition module 193-3 and detect one or more characters or text corresponding to the trace of the writing. The writing recognition module 193-3 may receive sequential coordinate values according to the trace of the writing of the user, and store the sequential coordinate values by a stroke. In addition, the writing recognition module 193-3 may use the stroke to create a stroke array. In addition, the writing recognition module 193-3 may compare a pre-stored writing library with the created stroke array, and extract a character(s) or a text corresponding to the trace of the writing.

The security module 193-4 is a module providing certification, permission and secure storage for hardware.

The system manager 193-5 monitors a conditions of each configurative element in the display apparatus 100 and provides a monitoring result to other modules. For example, in the case where an event occurs such as battery residual being insufficient, an error, or communication being disconnected, the system manager 193-5 may provide the result of monitoring to the UI framework 193-1 and output a notice message or notice sound.

The multimedia framework 193-6 is a module for reproducing multimedia contents either stored in the display apparatus 100 or provided from an external source. The multimedia framework 193-6 may include a player module, a camcorder module, a sound processing module, and the like. Accordingly, the multimedia framework 193-6 may reproduce various multimedia items and perform operations of creating and reproducing a screen and sound.

The X11 module 193-7 is a module for receiving various event signals from various hardware provided in the display apparatus 100. Herein, an event may be set in various ways such as an event where a user manipulation is sensed, an event where a system alarm occurs, an event where a certain program is executed or ends.

The APP manager 193-8 is a module for managing execution conditions of various applications installed in the storage 160. When an event where an application execution command is input is sensed, the APP manager 193-8 calls and executes an application corresponding to the event. That is, in response to the event where at least one event is selected being sensed, the APP manager 193-8 performs an operation of calling and executing the application corresponding to the event.

The connecting manager 193-9 is a module configured to support wired or wireless network connection. The connecting manager 193-9 may include various detailed modules such as DNET module, UpnP module and the like.

The item recognition module 193-10 is a module configured to recognize an item stored in the storage or received by the communicator 150, and extract information on that item. More specifically, the item recognition module 193-10 may extract specific information on a title of the item, a text corresponding to the title of the item, and other items.

Meanwhile, in an upper layer of the middle 193, there exists a browser layer embodying various functions of the display apparatus 100 and at least one application layer.

The software structure illustrated in FIG. 5 is just an example, and thus there is no limitation thereto. Therefore, some portions may be omitted, changed, or added. For example, in the storage 160, there may be further provided a sensing module, a messaging module such as a messenger program, Short Message Service (SMS) and Multimedia Message Service (MMS) program, email program, a call info aggregator program module, VoIP module, web browser 194-m module.

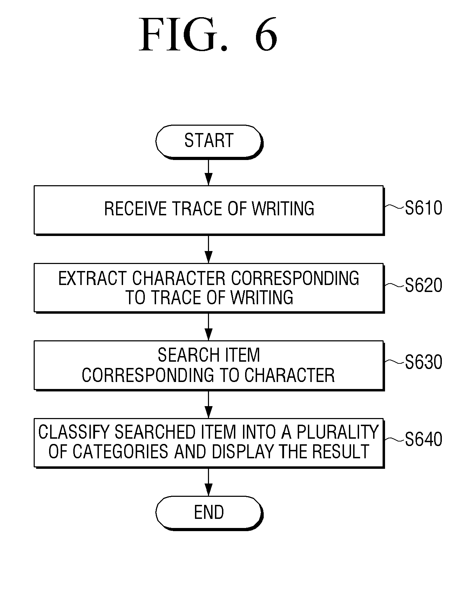

FIG. 6 is an example of a flowchart of a display method according to an exemplary embodiment of the present disclosure.

Referring to FIG. 6, the display apparatus 100 receives a trace of writing of the user from the remote control apparatus (S610). In this case, the display apparatus 100 may analyze coordinate data of the trace of the writing.

The display apparatus 100 that received the trace of the writing extracts one or more characters or text corresponding to the trace of the writing (S620). In this case, the display apparatus 100 is in a state where it has analyzed coordinate data of the trace of the writing, it may extract the character(s) or text corresponding to the analyzed coordinate data. That is, the display apparatus 100 compares the analyzed coordinate data of the trace of the writing with coordinate data of pre-stored characters or text traces, and extracts the character or text.

Next, the display apparatus 100 searches for one or more items corresponding to the extracted character or text (S630). The item(s) includes its unique name and title of the item, and thus the display apparatus 100 may search for and extract the name and title of the item(s) corresponding to the extracted character or text. In this case, the display apparatus 100 may be provided with the item corresponding to the extracted character or text from the external server. That is, at least one external server provides the item corresponding to the extracted character or text to the display apparatus 100, and the user selects one of the items corresponding to the character or text, thereby experiencing the selected item.

If an item corresponding to the extracted character or text from among the items is provided from the server, the display apparatus 100 displays the item. Especially, if there are a plurality of searched items, the display apparatus 100 classifies the searched plurality of items by category, and displays the classified result (S640). If there is no searched item, the display apparatus 100 may display a visual message and/or sound message showing that there is no search result. In addition, if the searched plurality of items belong to one category, the items may be classified into the one corresponding category, and the searched plurality of items may be arranged and displayed.

Meanwhile, the method of selecting one of the recommended items displayed and receiving the selected item from the external server and a method of selecting a recommended pay item and receiving the pay item after payment is made are the same as aforementioned, and thus further explanation is omitted. According to another exemplary embodiment, when an item is selected from among a plurality of items displayed on the screen of the display 130, information, data or an item related to the selected item may be received.

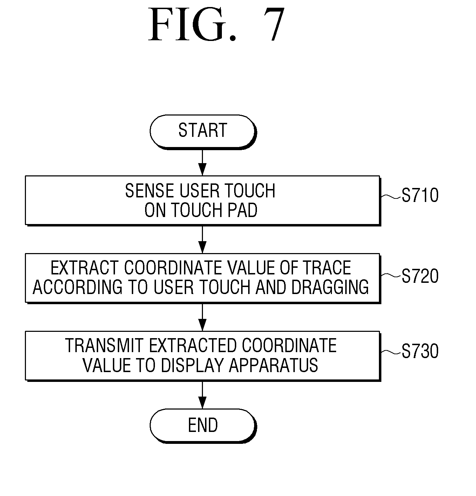

FIG. 7 is another example of a flowchart of a display method according to an exemplary embodiment of the present disclosure.

Referring to FIG. 7, a user writes on a touch pad included in a remote control apparatus, and the remote control apparatus senses a trace of the writing by the user's touch on the touch pad (S710). In this case, the remote control apparatus may sense the user's touch and dragging.

The remote control apparatus that has sensed the trace according to the user's touch and dragging may extract a coordinate value of the trace (S720). The remote control apparatus that extracted the coordinate value of the trace of the writing may transmit the extracted coordinate value of the trace of the writing to the display apparatus 100 (S730). The configuration of extracting the coordinate value of the trace of the writing is the same as the configuration in the detector 120 of the display apparatus 100 of FIG. 1, and thus detailed explanation is omitted. In this case, the remote control apparatus extracts the coordinate value of the trace of the writing, and thus the display apparatus 100 that has received the coordinate value of the trace of the writing may not extract an additional coordinate value of the trace of writing. Therefore, the display apparatus 100 may receive the coordinate value of the trace of writing from the remote control apparatus and search for and extract a character or text corresponding to the received coordinate value.

Meanwhile, the remote control apparatus may receive the trace of the writing of the user and instead of directly extracting the coordinate value of the trace of the writing, may transmit a signal according to the trace of the writing of the user to the display apparatus 100. That is, the remote control apparatus may transmit the signal that does not include a coordinate value of the trace of the writing to the display apparatus 100 and the display apparatus 100 that has received the signal may extract the coordinate value from the signal of the trace of the writing.

FIG. 8 is an example of a user's writing according to an exemplary embodiment of the present disclosure, and FIG. 9 is an example of a detailed screen of the display apparatus 100.

Referring to FIG. 8, a remote control apparatus 400 is provided. The remote control apparatus 400 comprises a touch pad 410 for inputting a user's touch. Although not illustrated in FIG. 8, the remote control apparatus 400 may further comprise at least one button for controlling the display apparatus 100.

The user may control activation and inactivation of a writing mode by the remote control apparatus 400. That is, the user may press a writing mode button provided on the remote control apparatus 400 thereby setting the remote control apparatus 400 and display apparatus 100 to the writing mode. Not only that, it is possible to orient a direction of the remote control apparatus 400 towards a writing mode display area 131 provided at one area of the display apparatus 100 and then touch the touch pad 410, thereby setting the remote control apparatus 400 and the display apparatus 100 to the writing mode. Meanwhile, it is possible to manipulate the remote control apparatus 400 in the aforementioned method again, thereby releasing the writing mode. As illustrated in FIG. 9, at one area of the display apparatus 100, the writing mode display area 131 may be formed, and at the writing mode display area 131, there may be displayed whether the current state is a writing mode. Furthermore, when the writing mode is activated, a text display area 132 of the display apparatus 100 may be displayed in a color contrast to other areas, or may have visual effects applied such as higher brightness compared to other areas.

With the writing mode set, the user may touch and/or drag on the touch pad 410. In this case, the user may use a touch pen or his/her body part. FIG. 8 illustrates dragging "N" with the user's fingers. That is, when the user writes "N" on the touch pad 410, the touch pad 410 displays the trace of "N" at the same time of the user's dragging.

The remote control apparatus 400 that sensed the trace according to the user's touch and dragging may extract a coordinate value of the trace. The remote control apparatus 400 that extracted the coordinate value of the trace of the user's writing may transmit the extracted coordinate value to the display apparatus 100. In this case, the remote control apparatus 400 extracts the coordinate value of the trace of the writing, and thus the display apparatus 100 that has received the coordinate value of the trace of the writing may not extract an additional coordinate value of the trace of writing. Therefore, the display apparatus 100 may receive the coordinate value of the trace of the writing from the remote control apparatus 400, and search for and extract a character corresponding to the received coordinate value.

On the other hand, the remote control apparatus 400 may not extract the coordinate value of the trace of the writing after receiving the trace of the writing. In this case, since the remote control apparatus 400 does not extract the coordinate value of the trace of the writing, the remote control apparatus 400 may transmit the signal according to the trace of the writing of the user to the display apparatus 100. That is, the remote control apparatus 400 may transmit the signal that does not include the coordinate value of the trace of the writing, and the display apparatus 100 that has received the signal may extract the coordinate value from the signal of the trace of the writing.

FIG. 9 illustrates the display apparatus 100 according to an input of the remote control apparatus 400 illustrated in FIG. 8. Referring to FIG. 9, the writing mode display area 131 displays that it is at a writing mode, and the text display area 132 displays the trace of the writing received from the remote control apparatus 400. Having set the mode in the writing mode by the remote control apparatus 400, the user has written "N" on the touch pad 410. Therefore, the writing mode display area 131 of the display apparatus 100 displays "writing mode ON", and the text display area 132 displays "N".

Meanwhile, the display apparatus 100 may display an item including "N" displayed on the text display area 132. That is, since the initially displayed character on the initialized text display area 132 is "N", one or more items having a name, title or appellation starting with "N" are searched.

If a plurality of items are searched, each item may be classified into predefined categories. Referring to FIG. 9, the searched items may be classified into three categories, the classified items being displayed on a first category area 133-1, a second category area 133-2, and a third category area 133-3. In addition, the plurality of category areas may be displayed symmetrically around the text display area 132. Herein, in FIG. 9, the display apparatus 100 is illustrated to have three categories, but there is no limitation thereto. In addition, in FIG. 9, the first category 133-1 and the second category area 133-2 are illustrated to be displayed in mutually symmetric direction around the text display area 132, but there is no limitation thereto. That is, an alignment direction of the items, classification standards of the categories, and location, size and shape of the writing mode area may be changed in various ways according to exemplary embodiments.

Meanwhile, an item may be stored in the display apparatus 100, or may be received from a transceiving apparatus such as an external server. In addition, an item may not be one received from the transceiving apparatus such as an external server.

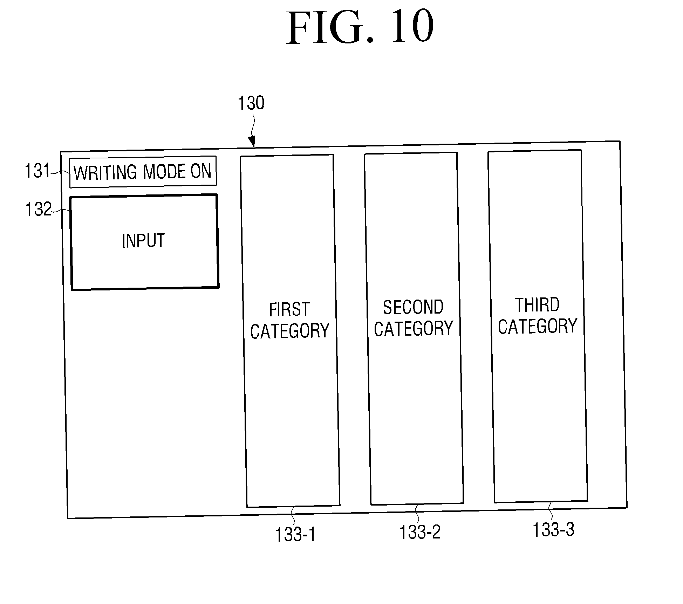

FIG. 10 illustrates an example of a search result screen according to various exemplary embodiments.

Referring to FIG. 10, the writing mode area 131 and text display area 132 may be displayed at the left, followed by the first category area 133-1 to third category area 133-3. In this case, the items included in each category may be arranged in top and bottom directions and be displayed.

Meanwhile, the user may input a plurality of characters successively. For example, the user may write one character, and then write a next character successively. In this case, the controller 140 may extract these characters successively based on the subsequent writing, and combine the extracted characters and search an item corresponding to the characters.

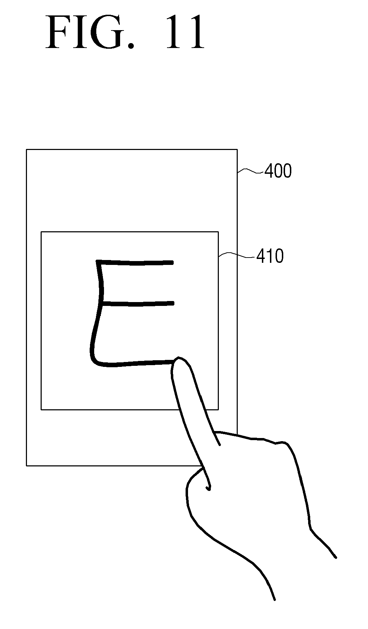

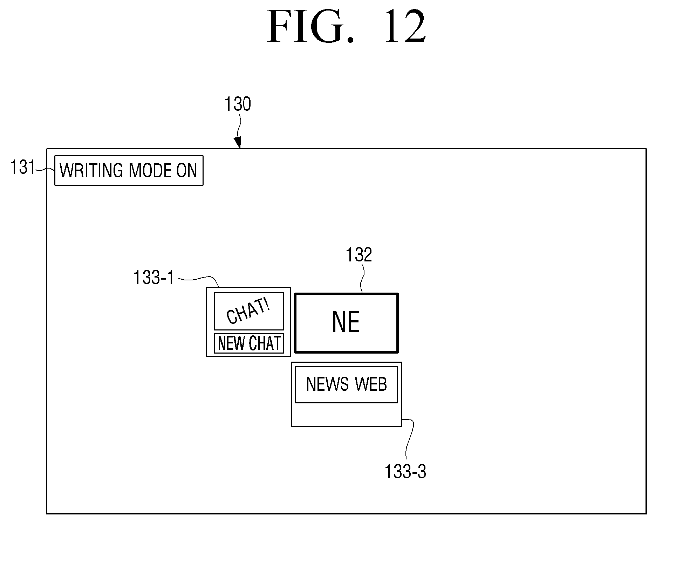

FIG. 11 illustrates a case where a subsequent writing trace is performed according to FIG. 8, and FIG. 12 illustrates a detailed screen of a display apparatus 100 according to such a subsequent writing.

Referring to FIG. 11, the user writes a trace of "E" as a subsequent writing of "N". In this case, the remote control apparatus 400 deletes the previously written "N" from the touch pad 410, and displays the trace of "E" subsequently written. That is, in response to the user writing "E" on the touch pad 410, the touch pad 410 displays the trace of "E" at the same time of the user's dragging. The remote control apparatus 400 transmits the trace of "E" displayed on the touch pad 410 to the display apparatus 100.

Referring to FIG. 12, the text display area 132 displays the trace of "E" received from the remote control apparatus 400. In this case, a signal corresponding to the trace of "E" that is transmitted by the remote control apparatus 400 indicates a subsequent writing of "N" that has been previously transmitted through a corresponding signal, and thus the text display area 132 displays the subsequent text "E" with the previous text "N" displayed. That is, the text display area 132 displays "NE".

Meanwhile, the display apparatus 100 may display an item including "NE" that is displayed on the text display area 132. That is, at a state as illustrated in FIG. 9, it becomes possible to search items starting with "NE" from among a plurality of items. Therefore, the user becomes able to search an item he/she wants to select more quickly and intuitively.

The user may select at least one item on the screen where a search result is displayed. Selecting by the user may be made in various methods.

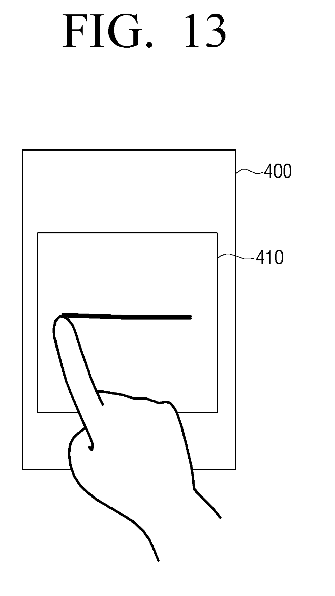

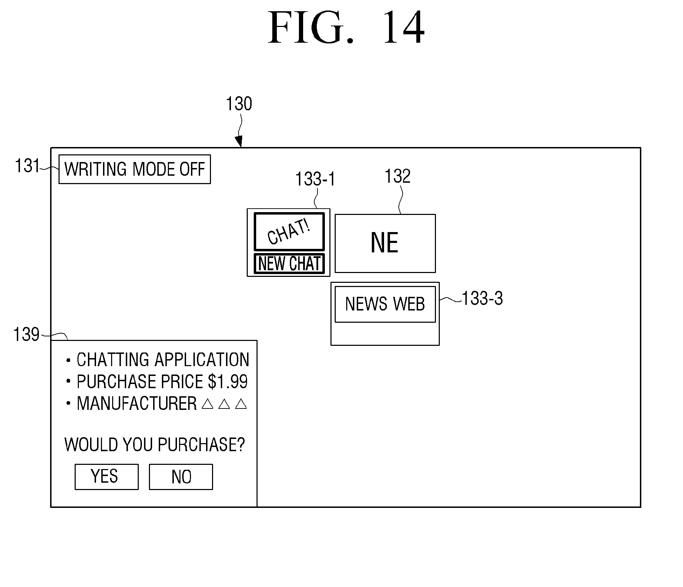

FIG. 13 is a view of an example of a method for selecting an item, and FIG. 14 is a detailed view of a screen of a display apparatus 100 when an item is selected.

Referring to FIG. 13, the user may release the writing mode, and then use the touch pad to perform a touch of a predetermined pattern and select an item. That is, in the main body of the remote control apparatus 400, a toggling switch (not illustrated) for toggling selection and release of a writing mode may be provided, and a toggling menu (not illustrated) for toggling selection and release of writing mode may be displayed within the touch pad. The user may select such a toggling switch or toggling menu and release the writing mode.

FIG. 13 illustrates a state where a certain pattern (for example, -) is drawn after releasing the writing mode. In this case, the controller 140 may release the writing mode. In response to the writing mode being released, the visual effect of the text display area 132 as explained in FIG. 8 disappears. The controller 140 selects an item according to the certain pattern drawn by the user after release of the writing mode.

According to FIG. 14, the controller 140 displays a graphic user interface (GUI) 131 showing that the writing mode has been released, and displays a cursor on an item displayed in the direction corresponding to the pattern drawn by the user. As in FIG. 13, in response to the user having drawn from the right to the left, the controller 140 displays a defined visual effect, that is a cursor on the "NEW CHAT" which is an item on the left of the text display area 132. At this state, in response to the user touching on the touch pad 410, the remote control apparatus 400 transmits a selection signal. In response to a selection signal having been received with the visual effect displayed on the item named "NEW CHAT", the controller 140 determines that the item has been selected. Accordingly, the controller 140 performs control operations corresponding to the item. For example, in response to "NEW CHAT" having been selected, the controller 140 receives an application named "NEW CHAT" from the external server, executes the received application, and displays the execution screen. Otherwise, various contents may be displayed on the item. And when it is determined that such content has been selected, the controller 140 may display the content. As such, the controller 140 may selectively display various items according to the content of the writing of the user, and may perform control operations corresponding to the item selected by the user of among the displayed items.

Herein, the "NEW CHAT" may be an item recommended by the external server. Therefore, at one area of the screen, an area denoting that the area is an item recommended by the external server may be displayed. In addition, "NEW CHAT" may be a pay item. Therefore, at one area of the screen, a payment screen 139 may be displayed. The payment screen 139 may display information on the pay item, and in response to the user paying the pay item, the settlement screen 139 may receive a result from the external server.

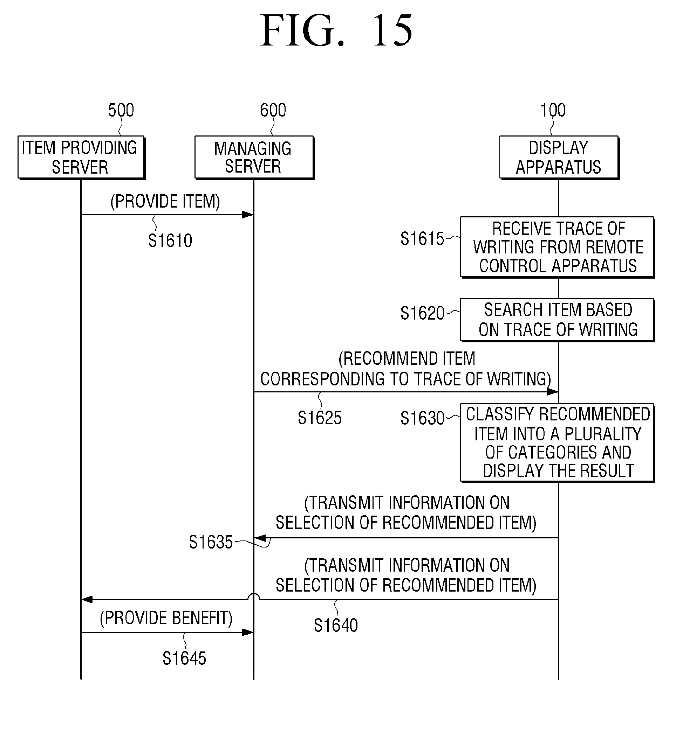

FIG. 15 is a flowchart of an item providing method according to an exemplary embodiment of the present disclosure.

Referring to FIG. 15, an item providing server 500 may provide an item to a managing server 600 (S1610). In this case, the managing server 600 may store the item. Meanwhile, the item providing server 500 may provide only information on the item to the managing server 600. In response to a user selecting the item, the item providing server 500 may transmit the item to the server 600, and the managing server 600 that has received the item may transmit the received item to the display apparatus 100. Herein, the item providing server 500 may be a server used for paid or free provision of the item operated by an item manufacturer.

The display apparatus 100 receives a trace of the user's writing from a remote control apparatus (S1615), and searches for an item based on the received trace of the writing (S1620). More specifically, the display apparatus 100 may transmit a character or text corresponding to the trace of the writing to the managing server 600, and the managing server 600 that has received the character or text recommends one or more items corresponding to the received text (S1625). The recommended items are classified into a plurality of categories and displayed (S1630). Further details are as aforementioned, and thus are omitted. Herein, the display apparatus 100 may display only icons or names of the recommended items, or may display simple information together with the icons or names of the recommended items. In addition, the managing server 600 may recommend not only an item provided from the item providing server 500 but also an item such as a content received from a broadcast transmission apparatus to the display apparatus 100.

The user may select an item from among the recommended items displayed thereby experiencing the selected item. Herein, the user may select the item recommended by the item providing server 500, in which case the display apparatus 100 may transmit information notifying that the recommended item has been selected to the managing server 600 and item providing server 600 (S1635, S1640). Especially, if the recommended item is a pay item, the user may make payment of the pay item. In response to the payment of the pay item being completed, information notifying that the recommended item has been paid may be transmitted to the managing server 600 and the item providing server 500. After the foregoing process, the item selected by the user is transmitted to the display apparatus 100, and the user may experience the transmitted item.

In response to the recommended item having been selected by the user, the item providing server 500 may provide a benefit to the managing server 600. A benefit may be a type of provision that a manager of the item providing server 500 provides to a manager of the managing server 600 by contract. That is, as the item stored in the item providing server 500 is recommended by the managing server 600 to the user, and the user selects the recommended item according to the recommendation by the managing server 600, the manager of the item providing server 500 gains profit by the manager of the managing server 600. Therefore, the manager of the item providing server 500 may provide a contracted provision in return to the manager of the managing server 600. Providing a benefit may be made by a contract between the manager of the item providing server 500 and the manager of the managing server 600.

As aforementioned, the user may conveniently control operations of the display apparatus through writing input on the remote control apparatus.

The display method of the display apparatus according to the aforementioned various exemplary embodiments may be stored in a non-transitory readable medium. Such a non-transitory readable medium may be mounted on various apparatuses and be used.

For example, in response to a user writing being performed in a remote control apparatus, a program code for performing a displaying method comprising receiving a trace of writing, extracting a character or text corresponding to the trace of the writing, searching for an item corresponding to the character or text, and classifying the searched items into a plurality of categories and displaying the result may be stored in a non-transitory readable medium and be provided.

A non-transitory readable medium refers to a computer readable medium that stores data semi-permanently rather than storing data for a short period of time such as a register, cache, and memory etc. More specifically, it may be a compact disk (CD), digital versatile disk (DVD), hard disc, blue-ray disc, USB, memory card, and ROM and the like.

Although a few exemplary embodiments have been shown and described, it would be appreciated by those skilled in the art that changes may be made to these embodiments without departing from the principles and spirit of the inventive concept, the scope of which is defined in the claims and their equivalents.

## Claims

1. A display apparatus comprising:
a display;
an input unit configured to receive a trace of writing performed in a remote control apparatus;
a detector configured to extract at least one character corresponding to the trace of writing; and
a controller configured to search for at least one item corresponding to the character from among a plurality of items stored in a storage of the display apparatus or provided from at least one external server, and display a result of the search on the display.

2. The display apparatus of claim 1, wherein the controller is further configured to classify the searched at least one item into a plurality of categories.

3. The display apparatus of claim 1 or 2, wherein the controller is further configured to display the character on the display.

4. The display apparatus of any one of claims 1 to 3, wherein the controller, in response to selection of an item from among one or more items displayed as the result of the search, is configured to receive the selected item or relevant information from the storage or the external server, and execute or process the received item or relevant information.

5. The display apparatus of any one of claims 1 to 4, wherein the controller, in response to selection of a pay item from among one or more items displayed as the result of the search, is configured to display a payment screen regarding the selected pay item, and in response to a payment being made through a payment screen on the display, receive the pay item or relevant information from the external server and execute or process the received pay item or relevant information.

6. The display apparatus of any one of claims 1 to 5, wherein the controller, in response to a trace of subsequent writing performed in the remote control apparatus, is configured to extract at least one subsequent character corresponding to the trace of the subsequent writing, re-search for at least one item corresponding to a combination of the character and the subsequent character, and display a result of the re-search on the display.

7. The display apparatus of claim 6, wherein the controller is further configured to classify the re-searched at least one item into a plurality of categories.

8. The display apparatus of claim 6 or 7, wherein the controller is further configured to display the combination of the character and the subsequent character on the display.

9. The display apparatus of any one of claims 6 to 8, wherein the controller is further configured to re-search for the at least one item corresponding to the combination of the character and the subsequent character, if the trace of the subsequent writing is performed within a predetermined time after the trace of the writing is received at the input unit.

10. The display apparatus of any one of claims 1 to 9, wherein the controller is further configured to classify the searched at least one item into a plurality of categories, and
wherein the controller is further configured to position a writing display area displaying the trace of writing at one area of a screen of the display, match each of the plurality of categories to top, bottom, left, and right direction of the writing display area, and align and display the searched at least one item according to the categories.

11. A display method comprising:
receiving a trace of writing from a remote control apparatus;
extracting at least one character corresponding to the trace of writing;
searching for at least one item corresponding to the character from among a plurality of items stored in a storage of the display apparatus or provided from at least one external server; and
displaying a result of the searching.

12. The display method of claim 11, further comprising classifying the searched at least one item into a plurality of categories.

13. The display method of claim 11 or 12, further comprising displaying the character on the display.

14. The display method of any one of claims 11 to 13, further comprising:
selecting an item from among one or more items displayed as the result of the search;
receiving the selected item or relevant information from the storage or the external server; and
executing or processing the received item or relevant information.

15. The display method of any one of claims 11 to 14, further comprising:
selecting a pay item from among one or more items displayed as the result of the search;
displaying a payment screen regarding the selected pay item;
in response to a payment being made through a payment screen on a display, receiving the pay item or relevant information from the external server; and
executing or processing the received pay item or relevant information.
